# EUROPEAN PATENT APPLICATION

(11) **EP 4 797 022 A1**
(43) Date of publication of application: **26.08.2026**
(21) Application number: 23955878.6
(22) Date of filing: 12.11.2023
(51) Int. Cl.: G05D 1/00

(54) **CONTROL METHOD FOR AUTONOMOUS WORKING APPARATUS, AUTONOMOUS WORKING APPARATUS, AND READABLE STORAGE MEDIUM**

(30) Priority: 20.10.2023 CN 202311369666; 20.10.2023 CN 202311373962
(71) Applicant: Zhejiang Sunseeker Industrial Co., Ltd., Jinhua, Zhejiang 321000 (CN)
(72) Inventor: FEI, Tao, Jinhua, Zhejiang 321000 (CN)
(74) Representative: Manna, Sara
(86) International application number: PCT/CN2023/131144
(87) International publication number: WO 2025/081560

(57) **Abstract**

A control method for an autonomous working apparatus, an autonomous working apparatus, and a readable storage medium, relating to the technical field of autonomous working apparatuses. The control method for an autonomous working apparatus comprises: when an autonomous working apparatus performs edge-following movement, acquiring an image of a region ahead in the travel direction of the autonomous working apparatus, and determining a working region (R) and a non-working region contained in the image; dividing the image by using at least one longitudinal dividing line (LK, RK) to obtain at least two detection regions, and acquiring a region of interest of the at least two detection regions, the longitudinal dividing lines (LK, RK) being parallel to the length direction of a vehicle body of the autonomous working apparatus; and, on the basis of an area proportion of a partial working region (R) contained in the region of interest within the region of interest and a boundary fitting slope of the partial working region, controlling the travel direction of the autonomous working apparatus, so as to cause the autonomous working apparatus to travel along the boundary of the working region. The control method, the autonomous working apparatus and the readable storage medium can more accurately adjust the travel direction of the vehicle body, allowing the autonomous working apparatus to keep performing edge-following movement.

## Description

The present disclosure claims priority to the following patent applications, the disclosure of which is herein incorporated by reference in its entirety:

Chinese Patent Application No. 202311369666X filed with the China National Intellectual Property Administration on October 20, 2023 and entitled "CONTROL METHOD FOR AUTONOMOUS OPERATION DEVICE, AUTONOMOUS OPERATION DEVICE, AND READABLE STORAGE MEDIUM".

Chinese Patent Application No. 2023113739627, filed with the China National Intellectual Property Administration on October 20, 2023 and entitled "CROSS-REGION CONTROL METHOD, AUTONOMOUS OPERATION DEVICE, AND READABLE STORAGE MEDIUM".

### TECHNICAL FIELD

The present disclosure relates to the technical field of autonomous operation devices, and in particular, to a control method for an autonomous operation device, an autonomous operation device, and a readable storage medium.

### BACKGROUND

With the popularization of garden lithium battery-powered devices and intelligent devices, an increasing number of consumers tend to choose intelligent robots to handle complex garden tasks, such as lawn mowing and lawn maintenance. Since the intelligent robots significantly reduce human labor input, users prefer to use intelligent robotic devices for lawn maintenance. As the intelligent robots become more functional and efficient, users find them easier to use, which further promotes the rapid popularization of the intelligent robots. During operation on a lawn, the intelligent robot needs to travel along the boundary of the lawn, and uses its built-in inductive sensor to detect the inductive signal from a boundary wire, so as to identify the boundary line and travel along the boundary. However, this requires embedding the wire along the boundary of the lawn in advance, which increases the user's workload and cost and affects the aesthetics of the garden lawn. In another aspect, for existing intelligent robotic mowers, the working region is typically a large lawn, and the boundary can be identified by a camera or configured as a closed live wire electrically connected to a boundary signal generation apparatus of the intelligent robotic mower. Upon reaching the boundary, the intelligent robotic mower generally either steers randomly or first reverses and then steers randomly, enabling the intelligent robotic mower to return to the inside of the boundary and continue mowing. However, for a lawn divided into a plurality of sections by roads, the existing intelligent robotic mowers cannot operate intelligently from one lawn section to another.

### SUMMARY

The objective of the present disclosure is to provide a control method for an autonomous operation device, an autonomous operation device, and a readable storage medium, which address at least one of the above problems in an at least partially improved manner.

According to a first aspect of the present disclosure, the objective is at least partially achieved by a control method for an autonomous operation device. The control method includes: when the autonomous operation device performs boundary-following travel, acquiring an image of a region ahead in a travel direction of the autonomous operation device, and determining a working region and a non-working region contained in the image; segmenting the image using at least one longitudinal dividing line to obtain at least two detection regions, and acquiring a region of interest from the at least two detection regions, where the longitudinal dividing line is parallel to a length direction of a vehicle body of the autonomous operation device; and controlling the travel direction of the autonomous operation device based on an area proportion of a partial working region contained in the region of interest within the region of interest and a slope of fitted boundary of the partial working region, so as to enable the autonomous operation device to travel along a boundary of the working region.

According to a second aspect of the present disclosure, the objective is at least partially achieved by a control method for an autonomous operation device. The control method includes: during a process in which the autonomous operation device travels along the boundary of a first working region where the autonomous operation device is currently located, if a first cross-region marker is detected, determining whether cross-region is required; if cross-region movement is determined to be required, steering according to a set manner and moving straight until a second cross-region marker is detected, and then determining that the autonomous operation device has moved to a second working region. The first working region and the second working region are separated by a non-working region.

The details of at least one embodiment will be set forth in the accompanying drawings and the description below. Other features, objectives, and advantages will be apparent from the description, the accompanying drawings, and the claims.

### BRIEF DESCRIPTION OF THE DRAWINGS

FIG. 1 is a detailed flowchart of a control method for an autonomous operation device according to a first embodiment of the present disclosure;
FIG. 2 is a schematic diagram of three detection regions obtained after a current image is segmented by a longitudinal dividing line LK and a longitudinal dividing line RK according to a first embodiment of the present disclosure;
FIG. 3 is a schematic diagram of five detection regions obtained after a current image is segmented by a longitudinal dividing line LK, a longitudinal dividing line RK, and a transverse dividing line FK according to a first embodiment of the present disclosure;
FIG. 4 is a schematic diagram after a front detection region is selected as a region of interest according to a first embodiment of the present disclosure;
FIG. 5 is a schematic diagram of a front detection region as a region of interest subjected to boundary-following control according to a first embodiment of the present disclosure;
FIG. 6 is a schematic diagram of a central processing unit (CPU) operation unit divided according to functions according to a first embodiment of the present disclosure;
FIG. 7 is a detailed flowchart of a cross-region control method according to a first embodiment of the present disclosure;
FIG. 8 is a schematic diagram illustrating an arrangement of a working region S1, a working region S2, and cross-region markers according to a first embodiment of the present disclosure; and
FIG. 9 is a schematic diagram illustrating an arrangement of a working region S3, a working region S4, a working region S5, and cross-region markers according to a first embodiment of the present disclosure.

### DETAILED DESCRIPTION

Embodiments of the present disclosure will be described in detail below with reference to the accompanying drawings, such that the objectives, features, and advantages of the present disclosure can be understood more clearly. It should be understood that the embodiments shown in the accompanying drawings are not intended to limit the scope of the present disclosure, but are merely intended to illustrate the essential spirit of the technical solution of the present disclosure.

In the following description, for the purposes of explanation, some specific details are set forth in order to provide a thorough understanding of the various disclosed embodiments. However, those skilled in the related art will recognize that an embodiment can be practiced without one or more of the specific details. In other instances, well-known apparatuses, structures, and techniques associated with the present disclosure may not be shown or described in detail to avoid unnecessarily obscuring the description of the embodiments.

Unless the context requires otherwise, throughout the specification and claims, the words "comprise", "include", and variations thereof, such as "comprises", "comprising", "includes", and "including", should be understood as having an open and inclusive meaning, that is, should be interpreted as "includes, but is not limited to".

Throughout this specification, reference to "one embodiment" or "an embodiment" means that a particular feature, structure, or characteristic described with reference to an embodiment is included in at least one embodiment. Thus, appearances of the phrase "in one embodiment" or "in an embodiment" at various positions throughout this specification do not necessarily all refer to the same embodiment. In addition, the particular feature, structure, or characteristic may be combined in any manner in one or more embodiments.

As used in this specification and the appended claims, the singular forms "a/an" and "the" include plural references, unless otherwise specified clearly in the context. It should be noted that the term "or" is generally used as a meaning of "or/and", unless otherwise specified clearly in the context.

For the purpose of clearly illustrating a structure and an operation mode of the present disclosure, various directional terms are used in the following description, but the terms "front", "rear", "left", "right", "outer", "inner", "outward", "inward", "upper", "lower", and the like should be interpreted as convenient expressions and should not be interpreted as limiting terms.

A first embodiment of the present disclosure relates to a control method for an autonomous operation device, which is applied to a central processing unit (CPU) operation unit of the autonomous operation device. The autonomous operation device is equipped with an image capturing apparatus, for example, a camera, and the CPU operation unit can be communicatively connected to the camera via a camera interface such as an MIPI interface or a CAMERA-USB interface. During the operation process of the autonomous operation device, the image capturing apparatus continuously captures images, and the CPU operation unit acquires the captured images from the image capturing apparatus in real time. When the autonomous operation device needs to perform boundary-following travel, the control method according to this embodiment is adopted to control the travel direction of the autonomous operation device, such that the autonomous operation device can maintain the boundary-following travel.

The autonomous operation device is a robot capable of autonomously moving within a preset working region enclosed by a boundary and performing specific operations. Typical examples include an intelligent sweeper/vacuum cleaner for performing cleaning operations, or an intelligent lawn mower for performing lawn mowing operations. The autonomous operation device can identify the boundary via the image capturing apparatus during an initial operation, during a first operation after initialization and reset, or when boundary identification is triggered by a user, so as to obtain the preset working region enclosed by the boundary. A docking station for charging the autonomous operation device is further configured on the boundary.

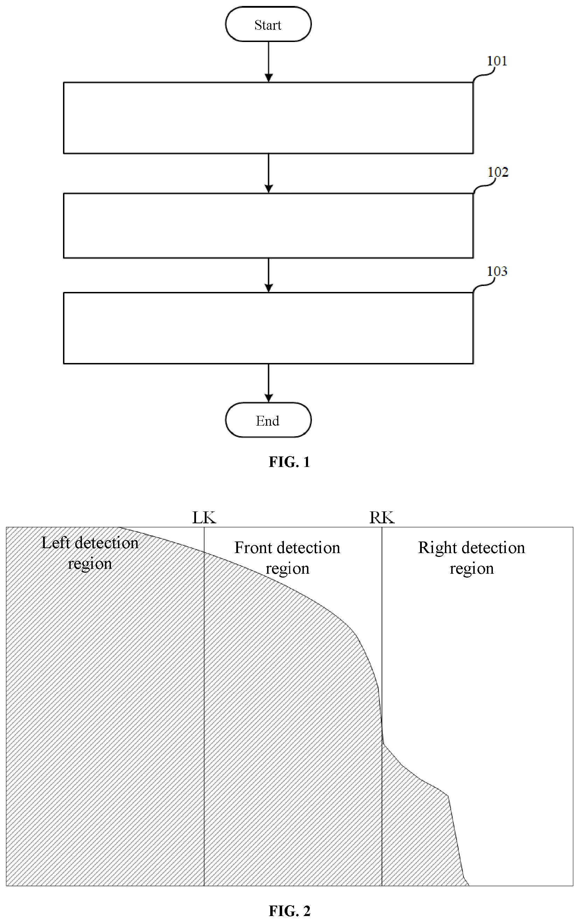

A detailed flowchart of the control method for an autonomous operation device according to this embodiment is shown in FIG. 1.

In step 101, when the autonomous operation device performs boundary-following travel, an image of a region ahead in a travel direction of the autonomous operation device is acquired, and a working region and a non-working region contained in the image are determined.

Specifically, the autonomous operation device needs to perform boundary-following travel in scenarios such as low battery level, completion of a current task, initial operation, boundary extension operation, or cross-region operation. The autonomous operation device may first move in one direction, and acquire a current image of a region ahead in the travel direction in real time, and continuously perform image identification on the image to determine whether the device is approaching the boundary of the working region. When the area of the working region in the image is 0, it is determined that the autonomous operation device is approaching the boundary of the working region, and then the autonomous operation device brakes to a stop and steers (for example, turns left or right) to travel along the boundary. The boundary-following travel direction is related to the steering direction of the autonomous operation device, and may be clockwise or counterclockwise.

During boundary-following travel, the autonomous operation device also acquires, in real time, images of the region ahead in the travel direction via the image capturing apparatus, and processes each acquired image according to this embodiment. Taking the current image as an example, a working region and a non-working region contained in the image are first identified. For example, during lawn image identification, a lawn segmentation model (for example, MaskRCNN) based on a deep neural network runs in the CPU operation unit. This model processes the acquired current image by inputting it into the lawn segmentation model and outputs a lawn mask in the current image. The mask indicates where the lawn is located, the portion covered by the mask is the working region, and the portion not covered by the mask is the non-lawn region, that is, the non-working region. However, this is not limited thereto. The CPU operation unit may also distinguish grass from non-grass by identifying the color and texture in the current image, that is, the working region and the non-working region. Alternatively, the CPU operation unit may also perform semantic segmentation on the current image to distinguish the grass from the non-grass, that is, the working region and the non-working region.

In step 102, the image is segmented using at least one longitudinal dividing line to obtain at least two detection regions, and a region of interest is acquired from the at least two detection regions. The longitudinal dividing line is parallel to the length direction of the vehicle body of the autonomous operation device.

Specifically, the current image is segmented using at least one longitudinal dividing line to obtain a plurality of detection regions. The longitudinal dividing line is parallel to the length direction of the vehicle body of the autonomous operation device; that is, the longitudinal dividing line is parallel to the travel direction of the autonomous operation device. Taking FIG. 2 as an example, the current image is segmented by two longitudinal dividing lines (denoted as a longitudinal dividing line LK and a longitudinal dividing line RK, respectively) to obtain three detection regions, which are denoted as a left detection region, a front detection region, and a right detection region, respectively.

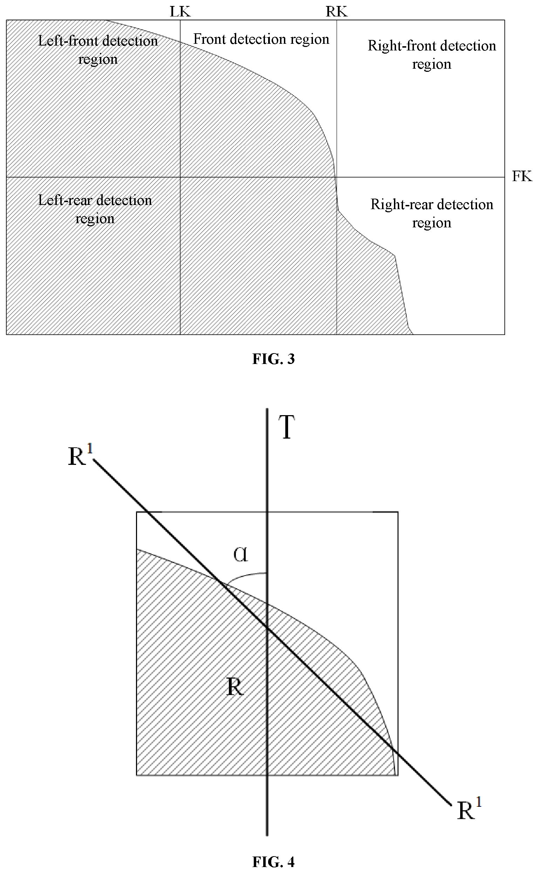

In one example, the image may also be segmented using at least one longitudinal dividing line and at least one transverse dividing line simultaneously to obtain a plurality of detection regions, and the transverse dividing line is perpendicular to the length direction of the vehicle body of the autonomous operation device; that is, the transverse dividing line is perpendicular to the travel direction of the autonomous operation device. In other words, the current image is segmented using one transverse dividing line and at least one longitudinal dividing line simultaneously to obtain the plurality of detection regions. Taking FIG. 3 as an example, the current image is segmented by two longitudinal dividing lines (denoted as the longitudinal dividing line LK and the longitudinal dividing line RK, respectively) and one transverse dividing line FK to obtain five detection regions, which are denoted as a left-front detection region, a front detection region, a right-front detection region, a left-rear detection region, and a right-rear detection region, respectively. It should be noted that there may also be a plurality of transverse dividing lines.

The positions where the transverse dividing line and the longitudinal dividing line segment the image may be adjusted. For example, the transverse dividing line and the longitudinal dividing line may be adjusted based on the vehicle size of the autonomous operation device as well as the mounting position and angle of the image capturing apparatus on the autonomous operation device, such that the sizes of different detection regions can be adjusted, thereby achieving the effect of adjustable detection targets and detection priorities. For example, the distance between the longitudinal dividing line and the boundary can be used to adjust the offset value of boundary-following travel of the autonomous operation device. In FIGs. 2 and 3, the spacing between the longitudinal dividing line LK and the longitudinal dividing line RK can be set based on the width of the autonomous operation device. For example, the actual distance represented by the spacing between the longitudinal dividing line LK and the longitudinal dividing line RK on the image is greater than or equal to the width of the autonomous operation device. Therefore, the region between the longitudinal dividing line LK and the longitudinal dividing line RK is equivalent to the region to which the autonomous operation device is about to travel.

Then, a region of interest (Region of interest, RoI) is determined from the plurality of detection regions. When each detection region serves as a region of interest, different boundary-following travel modes may be implemented, and one or more regions of interest may be selected. The region of interest may be manually configured by a current user. For example, the region of interest is directly set on the autonomous operation device (for example, via touch control, a button, or voice), or the current user selects the region of interest via a mobile terminal connected to the autonomous operation device.

In one example, the current user has configured the operation mode of the autonomous operation device, and the central processing unit selects the region of interest from the plurality of detection regions based on the current operation mode of the autonomous operation device.

Taking FIG. 2 as an example, if the current operation mode is cutting inside the boundary or cutting outside the boundary, the left detection region or the right detection region is selected as the region of interest based on the travel direction of the autonomous operation device; if the current operation mode is cutting on the boundary, the front detection region is selected as the region of interest.

Specifically, if the current operation mode of the autonomous operation device is cutting inside the boundary, when the travel direction of the autonomous operation device is clockwise, the left detection region is selected as the region of interest; when the travel direction of the autonomous operation device is counterclockwise, the right detection region is selected as the region of interest.

If the current operation mode of the autonomous operation device is cutting outside the boundary, when the travel direction of the autonomous operation device is clockwise, the right detection region is selected as the region of interest; when the travel direction of the autonomous operation device is counterclockwise, the left detection region is selected as the region of interest.

If the current operation mode of the autonomous operation device is cutting on the boundary, the front detection region is selected as the region of interest.

Taking FIG. 3 as an example, if the current operation mode of the autonomous operation device is cutting inside the boundary, when the travel direction of the autonomous operation device is clockwise, the left-front detection region and/or the left-rear detection region is selected as the region of interest; when the travel direction of the autonomous operation device is counterclockwise, the right-front detection region and/or the right-rear detection region is selected as the region of interest.

If the current operation mode of the autonomous operation device is cutting outside the boundary, when the travel direction of the autonomous operation device is clockwise, the right-front detection region and/or the right-rear detection region is selected as the region of interest; when the travel direction of the autonomous operation device is counterclockwise, the left-front detection region and/or the left-rear detection region is selected as the region of interest.

If the current operation mode of the autonomous operation device is cutting on the boundary, the front detection region is selected as the region of interest.

In step 103, the travel direction of the autonomous operation device is controlled based on the area proportion of a partial working region contained in the region of interest within the region of interest and a slope of fitted boundary of the partial working region, so as to enable the autonomous operation device to travel along the boundary of the working region.

Specifically, after a region of interest is selected from the plurality of detection regions obtained by segmenting the current image, a partial working region contained in the region of interest, and the boundary of the partial working region may be acquired. The partial working region refers to a working region contained in the region of interest. It should be noted that in some cases, the region of interest may not contain the working region, or the entire region of interest is the working region.

During boundary-following travel, the autonomous operation device determines the boundary extension trend of the partial working region in the region of interest based on the area proportion of the partial working region contained in the region of interest within the region of interest, and then determines whether the working region is on the left side or the right side of the travel direction in combination with the slope of fitted boundary of the partial working region. In this way, the travel direction of the autonomous operation device is adjusted, such that the travel direction of the autonomous operation device is parallel to the boundary extension direction in the region of interest; that is, the travel direction of the autonomous operation device is parallel to the boundary of the working region, thereby controlling the autonomous operation device to travel along the boundary of the working region.

In one example, controlling the travel direction of the autonomous operation device based on the area proportion of the working region contained in the region of interest within the region of interest and the boundary slope includes: obtaining a current error amount of the autonomous operation device based on the area proportion of the partial working region within the region of interest and the slope of fitted boundary; and adjusting the travel direction of the autonomous operation device based on the current error amount of the autonomous operation device.

The calculation formula of the error amount is as follows: $error = \frac{\left(p-0.5\right) ⋅ d + \left({k}_{m}-{k}_{s}\right)}{2}$ $if \frac{{m}_{1}}{{z}_{1}} > \frac{{m}_{2}}{{z}_{2}} , then d = 1 ;$ $if \frac{{m}_{1}}{{z}_{1}} < \frac{{m}_{2}}{{z}_{2}} , then d = - 1 ;$ $if \frac{{m}_{1}}{{z}_{1}} = = \frac{{m}_{2}}{{z}_{2}} , then d = 0 ;$
where *error* represents an error amount of the autonomous operation device, *p* represents the area proportion of the partial working region contained in the region of interest within the region of interest, *kₘ* represents an indicator value for representing an included angle of the slope of fitted boundary relative to a longitudinal perpendicular bisector of the region of interest, *kₛ* represents an indicator value for an included angle of a preset boundary-following travel direction relative to the longitudinal perpendicular bisector of the region of interest, *z*₁ represents the area of the region of interest located on a first side region of the longitudinal perpendicular bisector after being segmented by the longitudinal perpendicular bisector, *z*₂ represents the area of the region of interest located on a second side region of the longitudinal perpendicular bisector after being segmented by the longitudinal perpendicular bisector, *m*₁ represents the area of the region of interest located on a first side region of a fitted boundary of the partial working region, and *m*₂ represents the area of the region of interest located on a second side region of the fitted boundary of the partial working region.

Taking FIG. 3 as an example, it is assumed that the current operation mode of the autonomous operation device is cutting on the boundary, the front detection region is selected as the region of interest. Referring to FIG. 4, the CPU operation unit first acquires the area *S*₁ of a partial working region R (the shaded portion in FIG. 4) contained in the region of interest, where the partial working region R refers to a working region in which all the working regions contained in the current image fall within the region of interest. The area *Sᵣ* of each region of interest can be calculated based on the positions of the transverse dividing line and the longitudinal dividing line in the image. Taking FIG. 3 as an example, the area of the front detection region serving as the region of interest is 1/6 of the area of the current image. Subsequently, the ratio of the area *S*₁ of the aforementioned partial working region R to the area *Sᵣ* of the region of interest is calculated to obtain the area proportion *p* = *S*₁/*S*₂ of the partial working region R within the region of interest.

Then, the slope of fitted boundary *k* of the partial working region R is acquired, and the specific method may be as follows: Firstly, points at the boundary of the partial working region R within the region of interest are collected to acquire coordinates of all points on the boundary of the partial working region R. Subsequently, coordinates of all the points on the boundary are fitted using a least-squares method to obtain a straight line R¹-R¹, that is, the fitted boundary of the partial working region R, and obtain a firstorder linear equation *f*(*x*)= *kx* + *b* of the straight line R¹-R¹ serving as the fitted boundary. In this way, the slope *k* of the straight line R¹-R¹ can be obtained. The longitudinal perpendicular bisector T of the region of interest can be understood as a line parallel to the Y-axis of the image. An included angle *α* between the straight line R¹-R¹ of the slope *k* and the longitudinal perpendicular bisector T is obtained, and the included angle is converted into an indicator value *kₘ* capable of representing the included angle and is substituted into the calculation. The indicator value is, for example, a radian value obtained through angle conversion. One radian is equal to *π*/180 degrees, and the radian value *kₘ* obtained by converting the included angle *α* is (*α* · *π*)/180. In FIG. 4, if the included angle between the straight line R¹-R¹ and the longitudinal perpendicular bisector T is a negative value, the indicator value obtained by converting the included angle is also a negative value. The value of *kₛ* is related to the boundary-following travel mode of the autonomous operation device. If the boundary-following travel is parallel to the boundary, then *kₛ* = 0; if the autonomous operation device is required to have a fixed angle with the boundary during the boundary-following travel, the value of *kₛ* can be obtained based on the conversion of the fixed angle. *kₛ* is an indicator value converted in the same manner as *kₘ*. For example, if *kₘ* is a radian value, *kₛ* is also converted into a radian value.

*z*₁ and *z*₂ represent the areas of two regions located on the first side and the second side of the longitudinal perpendicular bisector after the region of interest is segmented by the longitudinal perpendicular bisector. The first side and the second side are respectively the left side and the right side of the longitudinal perpendicular bisector, depending specifically on the travel direction of the autonomous operation device along the boundary. If the autonomous operation device travels clockwise along the boundary, the first side is the left side of the longitudinal perpendicular bisector, and the second side is the right side of the longitudinal perpendicular bisector; if the autonomous operation device travels counterclockwise along the boundary, the first side is the right side of the longitudinal perpendicular bisector, and the second side is the left side of the longitudinal perpendicular bisector.

*m*₁ and *m*₂ represent the areas of two regions located on the first side and the second side of the boundary of the partial working region within the region of interest. The first side and the second side are respectively the left side and the right side of the boundary, depending specifically on the travel direction of the autonomous operation device along the boundary. If the autonomous operation device travels clockwise along the boundary, the first side is the left side of the boundary, and the second side is the right side of the boundary; if the autonomous operation device travels counterclockwise along the boundary, the first side is the right side of the boundary, and the second side is the left side of the boundary.

In FIG. 4, the autonomous operation device travels clockwise along the boundary; *z*₁ represents the area of the region located on the left side of the longitudinal perpendicular bisector T after the region of interest is segmented by the longitudinal perpendicular bisector T, *z*₂ represents the area of the region located on the right side of the longitudinal perpendicular bisector T after the region of interest is segmented by the longitudinal perpendicular bisector T, and *z*₁ and *z*₂ are each half of the area *Sᵣ* of the region of interest; *m*₁ represents the area of the region located on the left side of the boundary of the partial working region within the region of interest, i.e., the area *S*₁ of the partial working region R, and *m*₂ represents the area of the region located on the right side of the boundary of the partial working region within the region of interest, i.e., the area of the non-working region (the blank portion in FIG. 4) within the region of interest, *m*₂ = *Sᵣ* - *S*₁. In another example, the area of the region located on the left side of the straight line R¹-R¹ serving as the fitted boundary within the region of interest may also be calculated as *m*1, and the area of the region located on the right side of the straight line R¹-R¹ serving as the fitted boundary within the region of interest may be calculated as *m*2. The value of *d* may be obtained based on the above formula.

By substituting the values of *p*, *kₘ*, and *d* calculated based on the foregoing process into the calculation formula of the error amount *error*, the current error amount *error* can be obtained.

After the current error amount *error* is calculated, a control amount corresponding to the current error amount is acquired. For example, a PID algorithm is used to calculate the control amount corresponding to the current error amount, such that the error amount can be made smaller and smaller by the PID method. The above control amount is used to control the rotation speeds of the left and right wheels of the autonomous operation device. For example, for a rear-wheel-driven autonomous operation device, the speeds of the left-rear wheel and the right-rear wheel are adjusted, and the travel direction of the autonomous operation device is adjusted by generating a speed difference between the left-rear wheel and the right-rear wheel. If the error amount *error* calculated based on FIG. 4 is a negative value, the corresponding control amount is also a negative value.

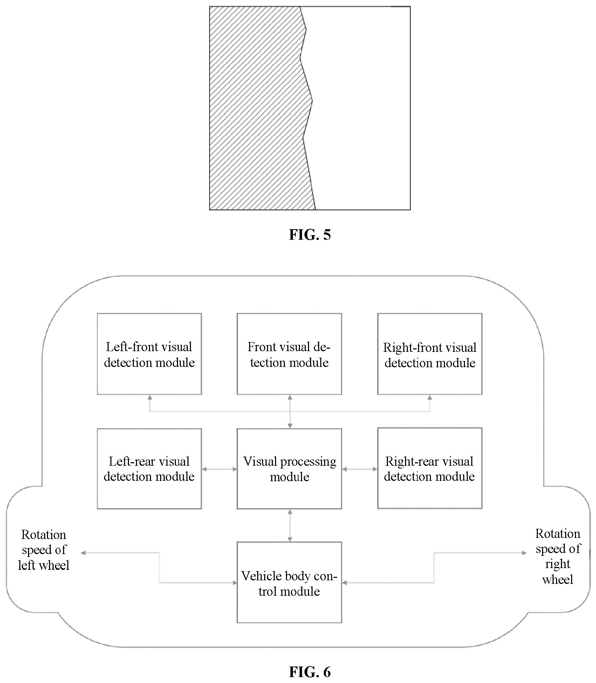

The positive or negative sign of the control amount is related to how the autonomous operation device steers, and the magnitude of the control amount is related to the steering angle of the autonomous operation device. If the control amount corresponding to the error amount *error* calculated based on FIG. 4 is a negative value, the travel direction of the autonomous operation device needs to be adjusted leftward. In this case, the rotation speed of the left-rear wheel may be decreased and/or the rotation speed of the right-rear wheel may be increased, such that the autonomous operation device steers leftward by a certain angle. In this way, the region of interest can achieve the effect shown in FIG. 5 through continuous adjustment; that is, the travel direction of the autonomous operation device substantially coincides with the fitted boundary of the partial working region contained in the region of interest.

It should be noted that in this embodiment, only the region of interest in one image is used as an example for description. During the boundary-following travel process of the autonomous operation device, the boundary of the working region within the region of interest is also constantly changing. Each time an image is acquired, the autonomous operation device continuously adjusts the travel direction by using the method according to this embodiment, such that the autonomous operation device can always maintain an excellent boundary-following travel effect.

In one example, when the autonomous operation device detects an obstacle in any one of the detection regions, the autonomous operation device is controlled to avoid the obstacle. That is, the autonomous operation device further performs obstacle detection for each detection region. When an obstacle is present in a certain detection region, the autonomous operation device actively avoids the obstacle and continues to perform the boundary-following travel after completing the avoidance. Taking FIG. 3 as an example, if an obstacle is detected in the left-front detection region, the autonomous operation device steers rightward by a set angle and travels for a certain distance, then steers leftward and travels back to the boundary to continue the boundary-following travel.

Further, based on FIG. 3, the CPU operation unit may be divided into the following plurality of modules based on functions. Referring to FIG. 6, the modules are respectively as follows:
visual processing module: configured to perform steps 101 and 102, so as to acquire an image, identify a working region and a non-working region in the image, and segment the current image. The sub-images of the detection regions obtained by segmentation are respectively sent to the corresponding modules for visual detection;
front visual detection module: configured to output a control amount to a vehicle body control module when the front detection region is used as the region of interest, so as to provide boundary-following control during boundary-following operation, and further perform obstacle avoidance for the front region;
left-front visual detection module: configured to output a control amount to the vehicle body control module when the left-front detection region is used as the region of interest, so as to provide boundary-following control during boundary-following operation, and further perform obstacle avoidance for the left-front region;
right-front visual detection module: configured to output a control amount to the vehicle body control module when the right-front detection region is used as the region of interest, so as to provide boundary-following control during boundary-following operation, and further perform obstacle avoidance for the right-front region;
left-rear visual detection module: configured to output a control amount to the vehicle body control module when the left-rear detection region is used as the region of interest, so as to provide boundary-following control during boundary-following operation, and further perform obstacle avoidance for the left-rear region;
right-rear visual detection module: configured to output a control amount to the vehicle body control module when the right-rear detection region is used as the region of interest, so as to provide boundary-following control during boundary-following operation, and further perform obstacle avoidance for the right-rear region; and
vehicle body control module: configured to adjust the rotation speeds of the left wheel and the right wheel based on the received control amount, so as to adjust the travel direction of the autonomous operation device.

In this embodiment, the vehicle body control is achieved during the boundary-following travel in the process of autonomous operation, and the travel direction of the autonomous operation device can be adjusted by combining the area proportion of the working region within the region of interest and the slope of fitted boundary, such that the boundary extension trend of the working region within the region of interest and the orientation of the working region within the region of interest can be fully considered to more accurately adjust the travel direction of the vehicle body, thereby enabling the autonomous operation device to maintain the boundary-following travel.

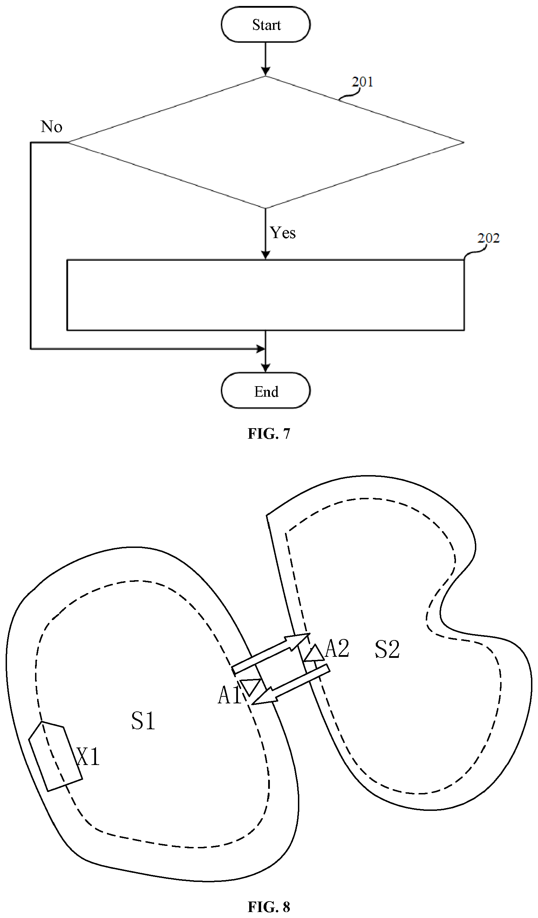

The autonomous operation device in the present disclosure may further perform the cross-region control method as shown in FIG. 7 to achieve cross-region travel between two working regions separated by a non-working region. This is mainly applicable to an operation scenario where a plurality of working regions are separated by a non-working region. For example, each working region is an entire lawn region, and the plurality of lawn regions are separated by non-working regions. The boundary between the non-working region and the working region has features that can be identified by a visual sensor, such as color differences. In this case, the non-working region may be a region with significant color differences from the lawn, such as a paved ground separating lawns or exposed land.

For adjacent working regions, if the autonomous operation device is required to perform cross-region work in the two working regions, cross-region markers need to be separately arranged on the boundaries of the two working regions. The cross-region markers are arranged in pairs, and a virtual cross-region channel is formed between the two cross-region markers. For example, a portion with the shortest distance between the two working regions is selected to arrange the virtual cross-region channel. The cross-region marker may be a signal transmitter, and the autonomous operation device is equipped with a signal receiver for receiving a marker signal transmitted by the signal transmitter so as to determine that the cross-region marker is detected. The marker signal indicates relevant information of the cross-region marker, such that the autonomous operation device can determine which cross-region marker is detected. For example, the signal transmitter is an RFID tag, and the signal receiver is an RFID reader. The RFID tag may be fixed underground by means of embedding, or may be directly fixed to the ground surface. Alternatively, the cross-region marker is a channel label with identification information that can be recognized by an image, and the autonomous operation device may collect, via the image capturing apparatus equipped thereon, the identification information on the channel label, so as to determine that the cross-region marker is detected and which cross-region marker it is.

Taking FIG. 8 as an example, a working region S1 and a working region S2 are separated by a non-working region. A cross-region marker A1 is arranged on the boundary of the working region S1, a cross-region marker A2 is arranged on the boundary of the working region S2, and a charging station X1 is further arranged on the boundary of the working region S1. The cross-region marker A1 and the cross-region marker A2 are a pair of cross-region markers having an established pairing relationship, and a virtual cross-region channel between the working region S1 and the working region S2 is formed between the cross-region marker A1 and the cross-region marker A2. It should be noted that in FIG. 2, the virtual cross-region channel being a straight channel is taken as an example, but the present disclosure is not limited thereto. A bent virtual cross-region channel may also be arranged based on the road condition of the non-working region between the working region S1 and the working region S2. The travel route of the virtual cross-region channel of each cross-region marker may be preset, or an intermediate cross-region marker may be arranged in the non-working region, so as to ensure that the autonomous operation device can accurately pass through the virtual cross-region channel.

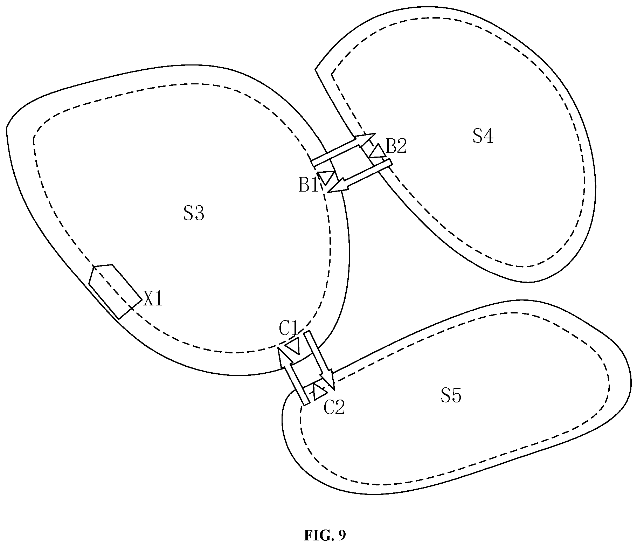

Taking FIG. 9 as an example, a working region S3, a working region S4, and a working region S5 are separated by non-working regions. A cross-region marker B1 is arranged on the boundary of the working region S3, a cross-region marker B2 is arranged on the boundary of the working region S4, a cross-region marker C1 is arranged on the boundary of the working region S3, a cross-region marker C2 is arranged on the boundary of the working region S3, and a charging station X1 is further arranged on the boundary of the working region S3. The cross-region marker B1 and the cross-region marker B2, and the cross-region marker C1 and the cross-region marker C2 are each a pair of cross-region markers having an established pairing relationship. A virtual cross-region channel between the working region S3 and the working region S4 is formed between the cross-region marker B1 and the cross-region marker B2, and a virtual cross-region channel between the working region S3 and the working region S5 is formed between the cross-region marker C1 and the cross-region marker C2.

That is, the autonomous operation device can perform boundary-following travel within a working region as shown in FIG. 1, and perform the cross-region control method as shown in FIG. 7 to achieve cross-region travel.

In step 201, during a process in which the autonomous operation device travels along the boundary of a first working region where the autonomous operation device is currently located, if a first cross-region marker is detected, it is determined whether cross-region movement is required. If yes, proceed to step 202; if not, the process is terminated.

In step 202, the autonomous operation device steers according to a set manner and moves straight until a second cross-region marker is detected, and then it is determined that the autonomous operation device has moved to a second working region. The first working region and the second working region are separated by a non-working region.

Specifically, the autonomous operation device may first perform an operation in the working region where the autonomous operation device is located, for example, by operating in a random steering mode. If the first cross-region marker is detected during the operation, the first working region where the autonomous operation device is currently located may be determined based on the correspondence relationship between the cross-region marker and the working region. Taking FIG. 8 as an example, if the autonomous operation device detects the cross-region marker A1 during the operation process, it is determined that the autonomous operation device is currently located in the working region S1; and if the autonomous operation device detects the cross-region marker A2 during the operation process, it is determined that the autonomous operation device is currently located in the working region S2.

When the autonomous operation device completes the operations in the current region, enters the return mode due to insufficient power, or receives a cross-region instruction, the cross-region operation may be triggered to search for the boundary of the first working region where the autonomous operation device is currently located. For example, the autonomous operation device travels in one direction and determines whether it has reached the boundary based on the image collected by the image capturing apparatus. After reaching the boundary, the autonomous operation device steers such that it becomes approximately parallel to the boundary of the first working region, and then travels along the boundary of the first working region. The boundary-following travel direction is preset and may be clockwise or counterclockwise.

At least one cross-region marker is arranged on the boundary of each working region. During boundary-following travel of the autonomous operation device, if the first cross-region marker is detected, it is first determined whether cross-region movement is required. The autonomous operation device can determine, by combining one or more of the current working mode, the detected cross-region marker, and the target working region indicated by the cross-region instruction, whether cross-region movement is required.

In one example, the autonomous operation device is currently in the return mode. After the first cross-region marker is detected, the first working region where the autonomous operation device is currently located may be determined based on the detected first cross-region marker and the correspondence between the cross-region marker and the working region, and it is determined whether a charging station is present in the first working region. If no charging station is present in the first working region, a second cross-region marker paired with the first cross-region marker is acquired, and it is determined whether a charging station is present in the second working region corresponding to the second cross-region marker. If a charging station is present in the second working region, it is determined that cross-region movement is required, and the autonomous operation device steers according to the set manner and moves straight until the second cross-region marker is detected, after which the autonomous operation device enters the second working region. If no charging station is present in the second working region, it is determined that cross-region movement is not required. Taking FIG. 8 as an example, assuming that the autonomous operation device is currently in the return mode and travels along the boundary of the working region S2, when the cross-region marker A2 is detected, the autonomous operation device determines that a charging station is present in the working region S1 corresponding to the cross-region marker A1 paired with the cross-region marker A2, and thus the autonomous operation device determines that cross-region movement is required.

In another example, the autonomous operation device is in the normal operation mode. After the first cross-region marker is detected, it is determined whether the autonomous operation device completes the cross-region movement after detecting the first cross-region marker during the current operation process; that is, it is determined whether the autonomous operation device enters the second working region corresponding to the second cross-region marker paired with the first cross-region marker after detecting the first cross-region marker. If the autonomous operation device has crossed the first cross-region marker and entered the second working region, it is determined that cross-region movement is not required. If the autonomous operation device has not crossed the first cross-region marker to enter the second working region, it is determined that cross-region movement is required, and the autonomous operation device steers according to the set manner and moves straight until the second cross-region marker is detected, after which the autonomous operation device enters the second working region. Taking FIG. 8 as an example, assuming that the autonomous operation device completes charging at the charging station X1 and starts the current operation, after completing the operation in the working region S1, the autonomous operation device needs to enter the next working region to continue the operation, which triggers a cross-region operation. The autonomous operation device detects the cross-region marker A1 during the travel along the boundary of the working region S1. Since the autonomous operation device has not crossed the cross-region marker A1 in the current operation process (that is, the autonomous operation device has not entered the working region S2 via the virtual cross-region channel between the cross-region marker A1 and the cross-region marker A2), cross-region movement is required. The autonomous operation device steers according to the set manner and moves straight until the cross-region marker A2 is detected, after which the autonomous operation device enters the working region S2. Subsequently, the autonomous operation device can operate in the working region S2. After completing the operation in the working region S2, the autonomous operation device travels along the boundary of the working region S2. When the cross-region marker A2 is detected, it is determined that cross-region movement is required. The autonomous operation device crosses the cross-region marker A2 and returns to the working region S1. Therefore, the autonomous operation device can return to the initial working region S1.

In yet another example, the autonomous operation device is in the normal operation mode, and the priority order of the cross-region markers is further preset in the autonomous operation device. The priority of the cross-region marker also represents the priority of a working region to which the cross-region marker leads. Therefore, the working regions can be operated according to the priority order. After detecting the first cross-region marker, the autonomous operation device determines whether the autonomous operation device has crossed the first cross-region marker in the current operation process. If the autonomous operation device has crossed the first cross-region marker, it is determined that cross-region movement is not required. If the first cross-region marker has not been crossed, then all cross-region markers that have not been crossed in the first working region are acquired, and then it is determined whether the first cross-region marker is the cross-region marker with the highest priority among all cross-region markers that have not yet been crossed. If yes, it is determined that the cross-region movement is required; if not, it is determined that cross-region movement is not required. Taking FIG. 9 as an example, the priority of the cross-region marker B1 on the boundary of the working region S3 is higher than the priority of the cross-region marker C1. Assuming that the autonomous operation device completes charging at the charging station X1 and starts the current operation, after completing the operation in the working region S3, the autonomous operation device needs to enter the next working region to continue the operation, which triggers a cross-region operation. During counterclockwise travel of the autonomous operation device along the boundary of the working region S3, the cross-region marker C1 is first detected. The autonomous operation has not crossed the cross-region marker C1, but there still exists a higher-priority cross-region marker B1 that has not been crossed, and therefore, it is determined that cross-region movement is not required. The autonomous operation continues traveling counterclockwise until the cross-region marker B1 is detected, in which case it is determined that cross-region movement is required. The autonomous operation device steers according to the set manner and moves straight until the cross-region marker B2 is detected, after which the autonomous operation device enters the working region S4. Subsequently, the autonomous operation device can operate in the working region S4. After completing the operation in the working region S4, the autonomous operation device travels along the boundary of the working region S4. When the cross-region marker B2 is detected, it is determined that cross-region movement is required. The autonomous operation device crosses the cross-region marker B2 and returns to the working region S3. In this case, the autonomous operation device determines that there still exists a cross-region marker C1 that has not been crossed. The autonomous operation device continues traveling along the boundary until the cross-region marker C1 is detected. At this moment, the autonomous operation device steers according to the set manner and moves straight until the cross-region marker C2 is detected, after which the autonomous operation device enters the working region S5. Subsequently, the autonomous operation device can operate in the working region S5. After completing the operation in the working region S5, the autonomous operation device travels along the boundary of the working region S5. When the cross-region marker C2 is detected, it is determined that cross-region movement is required. The autonomous operation device crosses the cross-region marker C2 and returns to the working region S3. At this point, the autonomous operation device has completed the operation in all the working regions. In this case, the autonomous operation device may trigger the return mode to perform boundary-following travel and return to the charging station for charging.

In yet another example, the autonomous operation device acquires a target working region from the received cross-region instruction sent by the user, or determines a target working region based on the current working mode. For example, if the autonomous operation device is currently in the return mode, the target working region is the working region where the charging station is located.

After acquiring the target working region, the autonomous operation device first determines, based on the target working region, a travel path from the first working region to the target working region. The travel path includes a working region traversed from the first working region to the target working region. The travel path may be the shortest path from the first working region to the target working region, or the path that passes through the largest number of unoperated regions may be preferentially selected as the travel path.

Determining whether cross-region movement is required includes: determining whether the second working region corresponding to the second cross-region marker paired with the first cross-region marker is in the travel path; if the second working region is in the travel path, determining that cross-region movement is required; and if the second working region is not in the travel path, determining that cross-region movement is not required. That is, the autonomous operation device travels from the current first working region to the target working region based on the travel path.

In this embodiment, the manner in which the autonomous operation device steers according to the set manner and moves straight includes, but is not limited to, the following two options.

Option 1: The cross-region marker is directional; that is, each cross-region marker has corresponding indication information, and the indication information at least indicates a specified angle by which the autonomous operation device needs to rotate. The indication information may be pre-stored in the autonomous operation device, or may be information carried by a QR code or the like provided on the cross-region marker itself, or may be information carried in a signal transmitted by the cross-region marker itself. When detecting the first cross-region marker, the autonomous operation device may acquire the indication information corresponding to the first cross-region marker. Therefore, the autonomous operation device first rotates by the specified angle corresponding to the indication information, and then moves straight until the second cross-region marker is detected, after which the autonomous operation device enters the second working region.

Option 2: The cross-region marker is non-directional, and the steering direction and angle required for cross-region movement are preset in the autonomous operation device. Therefore, when the first cross-region marker is detected, the autonomous operation device directly steers toward the set direction by the preset angle and then moves straight until the second cross-region marker is detected, after which the autonomous operation device enters the second working region.

In this embodiment, when the autonomous operation device performs an operation for the first time under circumstances such as after being placed in a new working scenario or restarting the work after reset, the boundaries of all the current working regions and the cross-region markers on the working regions need to be identified. The specific process is as follows:
When performing an operation for the first time, the autonomous operation device departs from a charging station and performs boundary identification steps below in the current working region: traveling along the boundary of the current working region according to the set direction; if a third cross-region marker is detected for the first time, steering according to the set manner and moving straight until a fourth cross-region marker is detected, then entering a next working region, establishing a pairing relationship between the third cross-region marker and the fourth cross-region marker, and performing the boundary identification steps in the next working region; if a fifth cross-region marker is not detected for the first time, determining the boundary of the current working region, steering according to the set manner and moving straight until a sixth cross-region marker paired with the fifth cross-region marker is detected, then returning to the previous working region, and performing the boundary identification steps in the previous working region; and if the charging station is detected, determining the boundary of the working region where the charging station is located, and stopping traveling. It should be noted that the autonomous operation device starting from the charging station is used as an example, but the present disclosure is not limited thereto. The autonomous operation device may also start from any position in any working region. If located on the boundary, the autonomous operation device directly travels along the boundary to search for a cross-region marker; if not located on the boundary, the autonomous operation device needs to first find the boundary and then travel along the boundary to search for a cross-region marker, and the above-mentioned boundary identification steps can be performed by taking the found cross-region marker as the starting point. The details will not be described herein again.

Taking FIG. 9 as an example, the autonomous operation device departs from the charging station X1 on the boundary of the working region S3 and travels clockwise along the boundary. When the cross-region marker B1 is detected, the cross-region marker B1 is configured to be located within the working region S3, and cross-region movement is performed. The process continues until the cross-region marker B2 is detected and the autonomous operation device enters the working region S4. The cross-region marker B2 is configured to be located within the working region S4, a pairing relationship between the cross-region marker B1 and the cross-region marker B2 is established, and the autonomous operation device travels clockwise along the boundary of the working region S4 until the cross-region marker B2 is detected again. In this case, the autonomous operation device has traveled a full loop along the boundary of the working region S4, and the resulting closed path is the boundary of the working region S4. Then, the autonomous operation device performs cross-region movement and returns to the previous working region, i.e., the working region S3. After the cross-region marker B1 is detected again, the autonomous operation device enters the working region S3, and continues to travel clockwise along the boundary of the working region S3 from the cross-region marker B1.

When the cross-region marker C1 is detected, the cross-region marker C1 is configured to be located within the working region S3, and cross-region movement is performed. The process continues until the cross-region marker C2 is detected and the autonomous operation device enters the working region S5. The cross-region marker C2 is configured to be located within the working region S5, a pairing relationship between the cross-region marker C1 and the cross-region marker C2 is established, and the autonomous operation device travels clockwise along the boundary of the working region S5 until the cross-region marker C2 is detected again. In this case, the autonomous operation device has traveled a full loop along the boundary of the working region S5, and the resulting closed path is the boundary of the working region S5. Then, the autonomous operation device performs cross-region movement and returns to the previous working region, i.e., the working region S3. After the cross-region marker C1 is detected again, the autonomous operation device enters the working region S3, and continues to travel clockwise along the boundary of the working region S3 from the cross-region marker C1 until the charging station X1 is detected. In this case, the autonomous operation device has traveled a full loop along the boundary of the working region S3, and the resulting closed path is the boundary of the working region S3. The travel then ends, completing the identification of the boundaries of all working regions and the cross-region markers on the working regions.

During the above process of identifying the boundary of the working region, the autonomous operation device can complete a first trimming operation. If the autonomous operation device moves beyond an expected working region during the boundary-following travel, the user may actively set boundary objects, such as setting a fence. If no error (e.g., a cross-region error or a boundary identification error) occurs during the boundary-following travel, the pass-through information input by the user may be received via a human-computer interaction interface.

In some embodiments, the autonomous operation device may start the boundary-following travel immediately after reaching the boundary of the working region, without having to return to the charging station first, as long as it can be ensured that the autonomous operation device travels along the boundary to form a closed path. During the boundary-following travel, the autonomous operation device can, via the image capturing apparatus, detect that the autonomous operation device passes the charging station.

This embodiment provides a cross-region control method, in which cross-region markers are arranged in pairs between adjacent working regions. The arrangement of the cross-region markers in pairs is equivalent to establishing a virtual cross-region channel between the adjacent working regions. Therefore, the autonomous operation device can achieve autonomous cross-region movement by means of the virtual cross-region channel. In addition, the position of the cross-region marker can be changed at will, which provides greater convenience and flexibility without requiring additional work for wire trenching and wire burying.

A second embodiment of the present disclosure relates to an autonomous operation device configured to perform the control method according to the first embodiment. The autonomous operation device may further perform the cross-region control method for an autonomous operation device shown in FIG. 7.

Specifically, the autonomous operation device includes a CPU operation unit configured to perform the control method. The autonomous operation device is equipped with an image capturing apparatus. During the operation process of the autonomous operation device, the image capturing apparatus continuously captures images, and the CPU operation unit acquires the captured images from the image capturing apparatus in real time. When the autonomous operation device needs to perform boundary-following travel, the control method according to this embodiment is adopted to control the travel direction of the autonomous operation device, such that the autonomous operation device can maintain the boundary-following travel.

The autonomous operation device is a robot capable of autonomously moving within a preset working region enclosed by a boundary and performing specific operations. Typical examples include an intelligent sweeper/vacuum cleaner for performing cleaning operations, or an intelligent lawn mower for performing lawn mowing operations. The autonomous operation device can identify the boundary via the image capturing apparatus during an initial operation, during a first operation after initialization and reset, or when boundary identification is triggered by a user, so as to obtain the preset working region enclosed by the boundary. A docking station for charging the autonomous operation device is further configured on the boundary.

A third embodiment of the present disclosure relates to a non-transitory computer-readable storage medium having stored thereon processor-executable instructions, where the executable instructions are configured to enable a processor of an autonomous operation device to perform the control method according to the first embodiment.

The preferred embodiments of the present disclosure have been described in detail above. However, it should be understood that an aspect of the embodiments may be modified, if necessary, to employ aspects, features, and concepts of the various patents, applications, and publications to provide another embodiment.

These and other modifications can be made to the embodiments based on the detailed description described above. Generally, in the claims, the terms used should not be construed to be limited to the specific embodiments disclosed in this specification and the claims, but should be construed to include all possible embodiments along with the full scope of equivalents to which such claims are entitled.

## Claims

1. A control method for an autonomous operation device, comprising:
when the autonomous operation device performs boundary-following travel, acquiring an image of a region ahead in a travel direction of the autonomous operation device, and determining a working region and a non-working region contained in the image;
segmenting the image using at least one longitudinal dividing line to obtain at least two detection regions, and acquiring a region of interest from the at least two detection regions, wherein the longitudinal dividing line is parallel to a length direction of a vehicle body of the autonomous operation device; and
controlling the travel direction of the autonomous operation device based on an area proportion of a partial working region contained in the region of interest within the region of interest and a slope of fitted boundary of the partial working region, so as to enable the autonomous operation device to travel along a boundary of the working region.

2. The control method according to claim 1, wherein controlling the travel direction of the autonomous operation device based on the area proportion of the working region contained in the region of interest within the region of interest and a boundary slope comprises:
obtaining a current error amount of the autonomous operation device based on the area proportion of the partial working region within the region of interest and the slope of fitted boundary; and
adjusting the travel direction of the autonomous operation device based on the current error amount of the autonomous operation device.

3. The control method according to claim 2, wherein a calculation formula for the error amount is as follows: $error = \frac{\left(p-0.5\right) ⋅ d + \left({k}_{m}-{k}_{s}\right)}{2} ;$ $if \frac{{m}_{1}}{{z}_{1}} > \frac{{m}_{2}}{{z}_{2}} , then d = 1 ;$ $if \frac{{m}_{1}}{{z}_{1}} < \frac{{m}_{2}}{{z}_{2}} , then d = - 1 ;$ $if \frac{{m}_{1}}{{z}_{1}} = = \frac{{m}_{2}}{{z}_{2}} , then d = 0 ;$ wherein *error* represents an error amount of the autonomous operation device, *p* represents an area proportion of the partial working region contained in the region of interest within the region of interest, *kₘ* represents an indicator value for representing an included angle of the slope of fitted boundary relative to a longitudinal perpendicular bisector of the region of interest, *kₛ* represents an indicator value for an included angle of a preset boundary-following travel direction relative to the longitudinal perpendicular bisector of the region of interest, *z*₁ represents an area of the region of interest located on a first side region of the longitudinal perpendicular bisector after being segmented by the longitudinal perpendicular bisector, *z*₂ represents an area of the region of interest located on a second side region of the longitudinal perpendicular bisector after being segmented by the longitudinal perpendicular bisector, *m*₁ represents an area of the region of interest located on a first side region of a fitted boundary of the partial working region, and *m*₂ represents an area of the region of interest located on a second side region of the fitted boundary of the partial working region.

4. The control method according to claim 1, wherein acquiring the region of interest from the at least two detection regions comprises:
selecting the region of interest from the at least two detection regions based on a current operation mode of the autonomous operation device.

5. The control method according to claim 4, wherein there are two longitudinal dividing lines, and the at least two detection regions comprise: a left detection region, a front detection region, and a right detection region that are sequentially arranged from left to right; and selecting the region of interest from the at least two detection regions based on the current operation mode of the autonomous operation device comprises:
if the current operation mode is cutting inside the boundary or cutting outside the boundary, selecting the left detection region or the right detection region as the region of interest based on the travel direction of the autonomous operation device; and
if the current operation mode is cutting on the boundary, selecting the front detection region as the region of interest.

6. The control method according to claim 1, wherein segmenting the image using the at least one longitudinal dividing line to obtain the at least two detection regions comprises:
segmenting the image using the at least one longitudinal dividing line and at least one transverse dividing line to obtain a plurality of detection regions, the transverse dividing line being perpendicular to the length direction of the vehicle body of the autonomous operation device.

7. The control method according to claim 2, wherein adjusting the travel direction of the autonomous operation device based on the current error amount of the autonomous operation device comprises:
acquiring a control amount corresponding to the current error amount of the autonomous operation device; and
adjusting rotation speeds of left and right wheels of the autonomous operation device based on the control amount, so as to adjust the travel direction of the autonomous operation device.

8. The control method according to claim 1, further comprising:
when an obstacle is detected in any one of the detection regions, controlling the autonomous operation device to avoid the obstacle.

9. A control method for an autonomous operation device, comprising
during a process in which the autonomous operation device travels along a boundary of a first working region where the autonomous operation device is currently located according to the control method as defined in any one of claims 1 to 8, if a first cross-region marker is detected, determining whether cross-region movement is required; and
if cross-region movement is determined to be required, steering according to a set manner and moving straight until a second cross-region marker is detected, and then determining that the autonomous operation device has moved to a second working region, wherein the first working region and the second working region are separated by a non-working region.

10. The control method according to claim 9, wherein determining whether cross-region movement is required comprises:
determining whether the autonomous operation device has completed cross-region movement after detecting the first cross-region marker during a current operation process;
if the autonomous operation device has not completed cross-region movement after detecting the first cross-region marker during the current operation process, determining that cross-region movement is required; and
if the autonomous operation device has completed cross-region movement after detecting the first cross-region marker during the current operation process, determining that cross-region movement is not required.

11. The control method according to claim 9, wherein determining whether cross-region movement is required comprises:
determining whether the first cross-region marker is a cross-region marker with a highest priority among cross-region markers that have not yet been crossed in the first working region;
if the first cross-region marker is the cross-region marker with the highest priority among the cross-region markers that have not yet been crossed in the first working region, determining that cross-region movement is required; and
if the first cross-region marker is not the cross-region marker with the highest priority among the cross-region markers that have not yet been crossed in the first working region, determining that cross-region movement is not required.

12. The control method according to claim 9, wherein if the autonomous operation device is in a return state, determining whether cross-region movement is required comprises:
determining whether a charging station is arranged in the second working region corresponding to the second cross-region marker paired with the first cross-region marker;
if the charging station is arranged in the second working region, determining that cross-region movement is required; and
if no charging station is arranged in the second working region, determining that cross-region movement is not required.

13. The control method according to claim 9, wherein when performing an operation for the first time, the autonomous operation device departs from a charging station and performs boundary identification steps below in a current working region:
traveling along a boundary of the current working region according to a set direction;
if a third cross-region marker is detected for the first time, steering according to the set manner and moving straight until a fourth cross-region marker is detected, then entering a next working region, establishing a pairing relationship between the third cross-region marker and the fourth cross-region marker, and performing the boundary identification steps in the next working region;
if a fifth cross-region marker is not detected for the first time, determining the boundary of the current working region, steering according to the set manner and moving straight until a sixth cross-region marker paired with the fifth cross-region marker is detected, then returning to a previous working region, and performing the boundary identification steps in the previous working region; and
if the charging station is detected, determining a boundary of a working region where the charging station is located, and stopping traveling.

14. The control method according to claim 9, further comprising: determining, based on a target working region, a travel path from the first working region to the target working region, wherein the travel path comprises working regions traversed from the first working region to the target working region; and determining whether cross-region movement is required comprises:
determining whether a second working region corresponding to the second cross-region marker paired with the first cross-region marker is in the travel path;
if the second working region is in the travel path, determining that cross-region movement is required; and
if the second working region is not in the travel path, determining that cross-region movement is not required.

15. The control method according to claim 9, wherein steering according to the set manner and moving straight comprises: steering based on acquired indication information of the first cross-region marker and moving straight.

16. The control method according to claim 9, wherein steering according to the set manner and moving straight comprises: steering towards a set direction by a preset angle and then moving straight.

17. An autonomous operation device, configured to perform the control method for an autonomous operation device according to any one of claims 1 to 16.

18. A non-transitory computer-readable storage medium having stored thereon processor-executable instructions, wherein the executable instructions are configured to enable a processor of an autonomous operation device to perform the control method according to any one of claims 1 to 16.
